# EUROPEAN PATENT SPECIFICATION

(11) **EP 2 822 397 B1**
(45) Date of publication and mention of the grant of the patent: **11.05.2016**
(21) Application number: 13712822.9
(22) Date of filing: 07.03.2013
(51) Int. Cl.: A23K 50/00, A23K 10/32, A23K 10/10

(54) **USE OF PURE CELLULOSE IN INCREASING THE ENERGY CONTENT OF FODDER**
VERWENDUNG REINER CELLULOSE BEI DER ERHÖHUNG DES ENERGIEINHALTES VON FUTTER
UTILISATION DE CELLULOSE PURE POUR AUGMENTER LA TENEUR ÉNERGÉTIQUE DU FOURRAGE

(30) Priority: 07.03.2012 US 201261607603 P
(43) Date of publication of application: 14.01.2015
(73) Proprietor: Aalto University Foundation, 00076 Aalto (FI)
(72) Inventor: VANHATALO, Kari, FI-00076 Aalto (FI); DAHL, Olli, FI-00076 Aalto (FI); PARVIAINEN, Kari, FI-02940 Espoo (FI)
(74) Representative: Seppo Laine Oy
(86) International application number: PCT/FI2013/050250
(87) International publication number: WO 2013/132159

(56) References cited:
- WO-A1-02/39827
- WO-A1-2011/154599
- DE-A1- 10 006 125

## Description

### Background of the Invention

### Field of the Invention

The present invention concerns a type of fodder containing microcellulose, in addition to regular grain crop.

### Description of Related Art

When feeding animals, in particular ruminants, all components of the fodder, such as the fibers, the protein and the sugars, all have their meaning in the different stages of the production and growth of the animal. The animals must be fed efficiently in all stages of their lives, until their slaughter. However, different requirements are placed on the feeding in these different stages, since, among others, the energy requirements of the animal change. Further, animals utilized for different purposes (e.g. as dairy cattle or as beef cattle) have different requirements with, for example, milk-producing cows needing large amounts of energy to effectively produce milk of high quality, and the requirements of beef cattle being guided by their growth.

Regular grains are used as fodder for livestock, among others, due to their starch content. As a carbohydrate, starch provides the grains with the desired energy-content. However, starch has a disadvantageous chemical structure, whereby it is dissolved too quickly in the rumen of the animal. Thus, the pH value of the rumen decreases in a disadvantageous manner after eating, and the function of the rumen is temporarily disturbed.

Further, regular plant fibers, such as those contained in regular grain crop, have relatively low carbohydrate contents. In addition to cellulose, they mainly contain hemicelluloses and lignin. Lignin has the disadvantage of not being easily digested, while the hemicelluloses are similar to the above-mentioned starch in that they are digested too quickly. Therefore, livestock is rarely fed using pure grain crop. Various additives are used instead, either as separate nutritive products or mixed with the regular grain crop. A common way of improving the fodder is to enrich the high-energy components in the plant fibers. These high-energy fibers can be fibers added to the grain crop, obtained, for example, from the wood processing industry.

JP 2011083281 concerns a type of fodder made of wood or plant pulp containing cellulose and hemicellulose.

FI 78814 and FI 1094/66 both concern raw materials for use in a fodder, which raw materials contain fines of the wood processing industry.

US 5023097 concerns the delignification of biomass to obtain nutritive fibers.

Further development has generally focused on using high amounts of specific additives, such as cellulose or hemicelluloses, or both.

US 2004 047897 concerns a type of fodder containing cellulose having a fiber length of 50-250µm as an additive DE-A-10006125 discloses modified micro-cellulose that is used in various fields. WO-A-2011/154599 discloses a process for producing microcellulose.
However, these fibers, even when containing high amounts of natural high-energy components, such as the cellulose and by-products of the wood-processing industry, contain said energy in a form that is not easily utilized and digested in the rumen of the animal, or digested too quickly.

DD 144862 concerns a type of fodder containing a mixture of regular plant crop and cellulose having a particle size of 20-40µm, for use by mixing it with various nutritive additives or medicaments.

However, in said publication, the role of the fodder is purely to deliver the further nutrients or medicaments to the animal. Thus, the nutritive content of the fodder, as such, has not been optimized.

### Summary of the Invention

It is an aim of the present invention to provide a fodder for use in feeding livestock, especially ruminants, which fodder has a high content of carbohydrates that are digested in an advantageous manner.

Particularly, it is an aim of the present invention to provide a fodder with a suitable energy-content not disturbing the function of the rumen, especially having a high glucose content.

These and other objects, together with the advantages thereof over known fodders and their uses, are achieved by the present invention, as hereinafter described and claimed.

Contrary to plant fibers containing cellulose, hemicelluloses, waxes and lignin, microcellulose with a high glucose content is efficiently utilized and digested in the animal, such as the ruminant, feeding on these. Thus, an improvement can be obtained also in the growth of the animal, or in the ability of the animal (e.g. the cow) to produce high-quality milk.

Thus, the present invention concerns a fodder containing at least one type of grain crop, as well as microcellulose, in a form that is digested in an advantageous manner.

More specifically, the fodder of the present invention is characterized by what is stated in the characterizing part of Claim 1.

Further, the process of the present invention for manufacturing the fodder is characterized by what is stated in the characterizing part of Claim 9.

Considerable advantages are obtained by means of the invention. Thus, the present invention provides a new type of fodder, which contains high-energy components in a form that can be digested by the animal in an advantageous manner. The content of, among others, protein, high-energy components, such as carbohydrates, and minerals, in the fodder can also be easily changed, whenever necessary, to accommodate to the changes in seasons and the growth of the animal.

Next, the invention will be described more closely with reference to the attached detailed description.

### Detailed Description of the Preferred Embodiments of the Invention

The present invention concerns a fodder containing at least one type of grain crop, as well as microcellulose in a form that is digested in an advantageous manner.

The microcellulose is in the form of "high-purity" microcellulose, i.e. microcellulose having a high glucose content, particularly having a glucose content of > 97 % by weight, most suitably a glucose content of > 98 % by weight. Alternatively, the microcellulose is in the form of "medium-purity" microcellulose, being lignin-containing microcellulose having a glucose content of > 70 % by weight, preferably > 80 % by weight, and most suitably > 90 % by weight.

The microcellulose can be used in the fodder in varying contents, depending on the energy requirement of the animal to be fed in the current stage of its development and growth. However, generally a microcellulose content of up to 29 % by weight of the fodder is used, preferably up to 20 % by weight, more preferably 5 - 15 % by weight, most suitably 8 - 10 % by weight.

As used herein, the term "microcellulose" is intended to include microcrystalline cellulose (MCC), powdered microcellulose, and hydrolyzed cellulose. The MCC is generally defined as microcellulose that has been purified, and partially depolymerised from alpha-cellulose. The degree of polymerization is typically less than 400. Similarly, the powdered cellulose has generally been purified and disintegrated from alpha-cellulose. Further, the term "microcellulose" is intended to include lignin-containing microcellulose, which (as stated above) can have a lower glucose-content, but instead contain lignin. In this case, the microcellulose is manufactured (according to the herein described procedures) using lignin-containing cellulose as a raw-material.

However, the used microcellulose typically has a hemicellulose content of about 0-10%, preferably 0.5-7%, more preferably 1-5% by weight, measured by a typical carbohydrate analysis method (e.g. described in "Determination of hemicelluloses and pectins in wood and pulp fibres by acid methanolysis and gas chromatography", 1996, Nordic pulp and paper research journal, No. 4, pp. 216-219).

The average particle size of the microcellulose is preferably 8 - 100 µm, more preferably 10 - 60 µm, even more preferably 15 - 30 µm, most suitably less than 20 µm.

The fodder can be provided in a form that resembles grasses or other common types of natural fodder plants, preferably with at least one type of grain crop containing grains and straws having an average particle/fiber length of > 2 mm, more preferably an average particle/fiber length of > 5 mm. Optionally, at least a part of the grain crop is fermented to silage, for example 10-100% by weight, suitably 50-100% by weight.

Said grain crop is preferably selected from maize, wheat, barley, sorghum, grasses, oats, alfalfa, lotus, cabbages, clover, millet and soybeans, as well as their hybrids and mixtures.

Other nutritive components can be added to the fodder in addition to the grain crop and the microcellulose, but these are not necessary. Particularly, it is preferred to select all fodder components from natural raw-materials, preferably plant-based materials, avoiding especially small synthetic compounds, e.g. medicaments, which can be accumulated in the meat of the animal or the milk produced by it.

According to a preferred embodiment of the invention, the fodder contains no further components in addition to the grain crop and the microcellulose, i.e. it consists of at least one type of grain crop and microcellulose.

However, in all embodiments of the invention, more than one type of grain crop can be mixed, to obtain further variation in the nutritive contents of the fodder. According to one alternative of the invention, at least two types of grain crop are used.

The present invention also concerns a process for manufacturing said fodder. Based on this process, at least one type of grain crop is provided, while the microcellulose is manufactured separately. These components are then mixed, whereafter optional further components are added to the formed fodder mixture.

The optional stage of fermenting the crop into silage can either be carried out before or after mixing the grain crop with the microcellulose.

The obtained fodder product can be processed, for example, by pressing it into pellets or other unit-packed product shapes. However, the fiber length of the grain crop is preferably maintained in the size of > 2mm, as stated above, whereby extensive grinding is avoided.

The microcellulose can be manufactured according to any known process.

However, according to a preferred embodiment of the invention, the microcellulose is manufactured by a process described in FI20105641. More particularly, a fibrous cellulosic material is subjected to mild acid hydrolysis at a temperature of at least 140 °C, preferably between 140 and 185 °C, more preferably between 150 and 180 °C, most suitably between 155 and 175 °C, and at a consistency of at least 8%, preferably from 8 to 50%, more preferably from 15 to 50%, even more preferably from 20 to 50%, and most suitably from 25 to 45%, based on the dry weight of the cellulose.

The hydrolysis can be carried out by contacting the fibrous cellulosic material with the acid, preferably by mixing.

The fibrous cellulosic material used as a starting material in the hydrolysis can be any cellulosic material, such as a material based on softwood or hardwood, preferably a chemical pulp thereof, which material can be hydrolyzed under the above-mentioned conditions, and can contain other materials than cellulose, such as lignin or hemicellulose. Also non-wood lignocellulosic plant materials can be suitable, such as cotton, grass, bagasse, straws of grain crops, flax, hemp, sisal, abaca or bamboo. Thus, partially the same materials can be used in the manufacture of the microcellulose as is used as the grain crop of the fodder of the invention. Most suitably, straws of the grain crops mentioned above are used in the starting material of the hydrolysis.

In the raw-material of the hydrolysis, the lignin content is preferably < 5%, more preferably < 2%, most suitably < 1% by weight of the starting material, while the hemicellulose content preferably is < 15%, more preferably < 10% by weight.

This process provides high quality microcellulose with a narrow particle size distribution, which size distribution can be controlled by varying the conditions of the hydrolysis process, e.g. the amount of used acid and the time used for the hydrolysis step, as described in FI20105641.

According to a further embodiment of the invention, the production of microcellulose is integrated into a cellulose production plant, as described in FI 20105642, whereby a steady supply of high-purity microcellulose is provided.

In animal husbandry, the livestock is generally fed according to a feeding plan, which takes into account measured contents of various components, such as protein, high-energy components, e.g. carbohydrates, and minerals in the fodder, as well as their digestibility. Based on this information, different types of animals (utilized for different purposes or being in different stages of growth) are provided with separate feeding plans, which can be easily changed when required, to take into account, among others, the changes in seasons and the growth of the animal.

Thus, according to an embodiment of the present invention, the process for manufacturing the fodder of the invention includes a step of designing a feeding plan, either for a specific type of animal or for an individual animal, taking into account the current energy needs of that animal or group of animals.

The following non-limiting example is intended merely to illustrate the advantages obtained with the embodiments of the present invention.

### Example

Exemplary fodder compositions were manufactured using the process described in FI 20105642, by mixing 0-10% by weight of microcellulose, in the form of microcrystalline cellulose (MCC) prepared according to FI20105641, into regular grain crop. The overall carbohydrate contents were calculated, as well as the relative increase in these contents. The contents of the compositions are portrayed in the following Table 1.

**Table 1.**

| Grain crop portion | MCC portion | Grain crop price | MCC price | Product mix price | Carbohydrate content and %:ual increase | Product mix sales price (carbohydr.cont./(200kg/t)) x 400) |
|---|---|---|---|---|---|---|
| (%) | (%) | (e/t) | (e/t) | (e/t) | (kg/t) (%) | (e/t) |
| 100.0 % | 0.0 % | 400 | 1000 | 400 | 200.0 (0 %) | 400 |
| 99.0 % | 1.0 % | 400 | 1000 | 406 | 207.7 (3.9 %) | 415 |
| 98.0 % | 2.0 % | 400 | 1000 | 412 | 215.4 (7.7 %) | 431 |
| 97.0 % | 3.0 % | 400 | 1000 | 418 | 223.1 (11.6%) | 446 |
| 96.0 % | 4.0 % | 400 | 1000 | 424 | 230.8 (15.4 %) | 462 |
| 95.0 % | 5.0 % | 400 | 1000 | 430 | 238.5 (19.3 %) | 477 |
| 90.0 % | 10.0 % | 400 | 1000 | 460 | 277.0 (38.5 %) | 554 |

| Grain crop portion | MCC portion | Grain crop price | MCC price | Product mix price | Carbohydrate content and %:ual increase | Product mix sales price (carbohydr.cont./(200kg/t)) x 400) |
|---|---|---|---|---|---|---|
| (%) | (%) | (e/t) | (e/t) | (e/t) | (kg/t) (%) | (e/t) |
| 100.0 % | 0.0 % | 400 | 2000 | 400 | 200.0 (0 %) | 400 |
| 99.0 % | 1.0 % | 400 | 2000 | 416 | 207.7 (3.9 %) | 415 |
| 98.0 % | 2.0 % | 400 | 2000 | 432 | 215.4 (7.7 %) | 431 |
| 97.0 % | 3.0 % | 400 | 2000 | 448 | 223.1 (11.6 %) | 446 |
| 96.0 % | 4.0 % | 400 | 2000 | 464 | 230.8 (15.4 %) | 462 |
| 95.0 % | 5.0 % | 400 | 2000 | 480 | 238.5 (19.3 %) | 477 |
| 90.0 % | 10.0 % | 400 | 2000 | 560 | 277.0 (38.5 %) | 554 |

When calculating the contents, the information of 200 kg/t of carbohydrates in the grain crop and 970 kg/t in the MCC has been used.

Table 1 further provides an estimate of the effect of the MCC price on the final price of an animal fodder product (displaying two different prices of MCC and varying contents of components). The final price is clearly lower than the price would be for corresponding products containing microcellulose manufactured according to alternative processes.

Traditionally, the price of microcrystalline cellulose has varied between 2000 and 100,000 €/ton, and the production levels have been low. The main uses have been the human food industry and the pharmaceutical industry. The above illustrated lowering of the market price of microcellulose (to a level between 1500 and 2000 €/ton) causes a lowering of the price of the final product of the present invention, whereby it becomes possible, or at least more advantageous, to use this material in animal fodder.

Large amounts of biomass are consumed daily by livestock worldwide. In North-America, for example, there are about 92,500,000 animals belonging to the groups of beef and dairy cattle, alone. Each animal eats about 10 to about 15 kg of biomass per day. Thus, on an annual level, the amount of consumed biomass, in North America, is about 335 to about 500 million tons, depending on the manner of calculation.

Therefore, a vast advantage is gained with the fodder of the present invention, which has low manufacturing costs, while still having a suitable energy-content not disturbing the function of the rumen, especially having a high glucose content.

## Claims

1. Fodder containing at least one type of grain crop, **characterized in that** it further contains microcellulose having a glucose content of> 97 % by weight, or lignin-containing microcellulose having a glucose content of > 70 % by weight.

2. The fodder according to claim 1, wherein the at least one type of grain crop is at least partly in the form of grains and straws having a length of > 2 mm.

3. The fodder according to claim 1 or 2, wherein the grain crop is at least partly fermented to silage.

4. The fodder according to any preceding claim, wherein the grain crop is selected from maize, wheat, barley, sorghum, grasses, oats, alfalfa, lotus, cabbages, clover, millet and soybeans, as well as their hybrids and mixtures.

5. The fodder according to any preceding claim, which contains up to 29 % by weight of the microcellulose, preferably up to 20 % by weight, more preferably 5 - 15 % by weight, most suitably 8 - 10 % by weight.

6. The fodder according to any preceding claim, wherein the microcellulose has an average particle size of 8 - 100 µm, preferably 10 - 60 µm, more preferably 15 - 30 µm, most suitably less than 20 µm.

7. The fodder according to any preceding claim, consisting of at least one type of grain crop and microcellulose.

8. The fodder according to any preceding claim, containing at least two types of grain crop.

9. A process for manufacturing the fodder according to any of claims 1 - 8, **characterized by**
- providing at least one type of grain crop,
- manufacturing microcellulose, and
- mixing said grain crop with said microcellulose.

10. The process according to claim 9, wherein the microcellulose is manufactured by subjecting a fibrous cellulosic material to acid hydrolysis at a temperature of at least 140 °C, at a consistency of at least 8%, based on the dry weight of the cellulose, particularly by contacting the fibrous cellulosic material with an acid, preferably by mixing.

11. The process according to claim 9 or 10, wherein the starting material of the hydrolysis is a material based on softwood or hardwood, preferably a chemical pulp thereof, or a non-wood lignocellulosic plant material, preferably selected from cotton, grass, bagasse, straws of grain crops, flax, hemp, sisal, abaca or bamboo, most suitably straws of grain crops.

12. The process according to any of claims 9 to 11, wherein the microcellulose is added to a content of up to 29 % by weight of the fodder, preferably up to 20 % by weight, more preferably 5 - 15 % by weight, even more preferably 8 - 10 % by weight, and most suitably to a content that is determined based on a feeding plan, which takes into account measured contents of various components in the fodder, their digestibility, the type of animal, the changes in seasons and the stage of growth of the animal.

## Patentansprüche

1. Futtermittel, aufweisend mindestens eine Getreideart, **dadurch gekennzeichnet, dass** es zusätzlich Mikrocellulose mit einem Glukosegehalt von > 97 Gewichts-% oder Lignin-aufweisende Mikrocellulose mit einem Glukosegehalt von > 70 Gewichts-% aufweist.

2. Futtermittel nach Anspruch 1, wobei die mindestens eine Getreideart mindestens teilweise in Form von Körnern und Halme mit einer Länge von > 2 mn ist.

3. Futtermittel nach Anspruch 1 oder 2, wobei das Getreide mindestens teilweise in Silagen fermentiert wird.

4. Futtermittel nach einem der vorhergehenden Ansprüche, wobei das Getreide aus Mais, Weizen, Gerste, Sorghum, Gräsern, Hafer, Luzerne, Lotosblume, Kohl, Klee, Hirse und Soja sowie deren Hybriden und Mischungen ausgewählt ist.

5. Futtermittel nach einem der vorhergehenden Ansprüche, welches bis zu 29 Gewichts-% Mikrozellulose, vorzugsweise bis zu 20 Gewichts-%, mehr bevorzugt von 5 - 15 Gewichts-%, am meisten bevorzugt von 8 - 10 Gewichts-% aufweist.

6. Futtermittel nach einem der vorhergehenden Ansprüche, wobei die Mikrocellulose eine durchschnittliche Partikelgröße von 8 - 100 µm, vorzugsweise von 10 - 60 µm, mehr bevorzugter von 15 - 30 µm, am meisten bevorzugt von weniger als 20 µm aufweist.

7. Futtermittel nach einem der vorhergehenden Ansprüche, bestehend aus mindestens einer Getreideart und Mikrocellulose.

8. Futtermittel nach einem der vorhergehenden Ansprüche, aufweisend mindestens zwei Arten von Getreide.

9. Verfahren zur Herstellung des Futtermittels nach einem der Ansprüche 1 - 8, **gekennzeichnet durch**:
- das Bereitstellen mindestens einer Getreideart,
- das Herstellen von Mikrozellulose und
- das Mischen der Getreideernte mit der Mikrozellulose.

10. Verfahren nach Anspruch 9, wobei die Mikrocellulose dadurch hergestellt ist, dass ein faserförmiges Cellulosematerial durch eine Säurehydrolyse bei einer Temperatur von mindestens 140 °C, bei einer Konsistenz von mindestens 8%, bezogen auf das Trockengewicht der Cellulose behandelt wird, insbesondere durch Kontaktieren des cellulosehaltigen Fasermaterials mit einer Säure, vorzugsweise durch Mischen.

11. Verfahren nach Anspruch 9 oder 10, wobei das Ausgangsmaterial der Hydrolyse ein Material basierend auf Nadel- oder Laubhölzern, vorzugsweise ein chemischer Zellstoff davon oder ein nicht-Holz Lignocellulose-Pflanzenmaterial ist, vorzugsweise ausgewählt aus Baumwolle, Gras, Bagasse, Halmen von Getreide, Flachs, Hanf, Sisal, Abaca oder Bambus, am meisten bevorzugt Halmen von Getreide.

12. Verfahren nach einem der Ansprüche 9 bis 11, wobei die Mikrozellulose zu einem Gehalt von bis zu 29 Gewichts-% Futtermittel vorzugsweise bis zu 20 Gewichts-%, und mehr bevorzugt 5 - 15 Gewichts-%, noch mehr bevorzugt 8-10 Gewichts-% und am meisten bevorzugst, zu einem Gehalt zugesetzt wird, welcher basierend auf einem Futterplan bestimmt ist, welcher gemessene Gehalte verschiedener Komponenten in dem Futtermittel, ihre Verdaulichkeit, die Art des Tieres, die Änderungen der Jahreszeiten und das Stadium des Wachstums des Tieres in Betracht zieht.

## Revendications

1. Fourrage contenant au moins un type de céréale de culture, **caractérisé en ce qu'**il contient en outre de la microcellulose présentant une teneur en glucose supérieure à 97 % en poids, ou de la microcellulose contenant de la lignine présentant une teneur en glucose supérieure à 70 % en poids.

2. Fourrage selon la revendication 1, dans lequel le au moins un type de céréale de culture est au moins partiellement sous la forme de graines et de pailles d'une longueur supérieure à 2 mm.

3. Fourrage selon la revendication 1 ou 2, dans lequel la céréale de culture est au moins partiellement fermentée en ensilage.

4. Fourrage selon l'une quelconque des revendications précédentes, dans lequel la céréale de culture est choisie parmi le maïs, le blé, l'orge, le sorgho, les graminées, l'avoine, la luzerne, le lotus, les choux, le trèfle, le millet et le soja, ainsi que parmi leurs hybrides et leurs mélanges.

5. Fourrage selon l'une quelconque des revendications précédentes, qui contient jusqu'à 29 % en poids de la microcellulose, de préférence jusqu'à 20 % en poids, de manière davantage préférée de 5 à 15 % en poids, de manière préférée entre toutes de 8 à 10 % en poids.

6. Fourrage selon l'une quelconque des revendications précédentes, dans lequel la microcellulose présente une taille moyenne de particule de 8 à 100 µm, de préférence de 10 à 60 µm, de manière davantage préférée de 15 à 30 µm, et de manière préférée entre toute inférieure à 20 µm.

7. Fourrage selon l'une quelconque des revendications précédentes, constitué d'au moins un type de céréale de culture et de microcellulose.

8. Fourrage selon l'une quelconque des revendications précédentes, contenant au moins deux types de céréale de culture.

9. Procédé de préparation d'un fourrage selon l'une quelconque des revendications 1 à 8, **caractérisé par**
- la fourniture d'au moins un type de céréale de culture,
- la fabrication de microcellulose, et
- le mélange de ladite céréale de culture avec la microcellulose.

10. Procédé selon la revendication 9, dans lequel la microcellulose est fabriquée en soumettant une matière cellulosique fibreuse à une hydrolyse acide à une température d'au moins 140 °C, à une consistance d'au moins 8 %, sur la base du poids sec de la cellulose, en particulier par le contact de la matière cellulosique fibreuse avec un acide, de préférence en mélangeant.

11. Procédé selon la revendication 9 ou 10, dans lequel la matière première de l'hydrolyse est une matière à base de bois tendre ou de bois dur, de préférence une pâte chimique de celui-ci, ou une matière végétale lignocellulosique qui n'est pas du bois, choisie de préférence parmi le coton, l'herbe, la bagasse, les pailles de cultures de céréale, le lin, le chanvre, le sisal, l'abaca ou le bambou, de manière la plus appropriée les pailles de cultures de céréale.

12. Procédé selon l'une quelconque des revendications 9 à 11, dans lequel la microcellulose est ajoutée à une teneur allant jusqu'à 29 % en poids du fourrage, de préférence jusqu'à 20 % en poids, de manière davantage préférée de 5 à 15 % en poids, ou mieux de 8 à 10 % en poids et de manière préférée entre toute à une teneur qui est déterminée sur la base du plan de l'alimentation, qui prend en compte les teneurs mesurées des divers composants dans le fourrage, leur digestibilité, le type d'animal, les changements de saison et le stade de croissance de l'animal.
